# EUROPEAN PATENT SPECIFICATION

(11) **EP 4 533 204 B1**
(45) Date of publication and mention of the grant of the patent: **11.03.2026**
(21) Application number: 22835030.2
(22) Date of filing: 13.12.2022
(51) Int. Cl.: G05D 16/06

(54) **PRESSURE REDUCER**
DRUCKMINDERER
RÉDUCTEUR DE PRESSION

(30) Priority: 01.06.2022 EP 22176760
(43) Date of publication of application: 09.04.2025
(73) Proprietor: Husqvarna AB, 561 82 Huskvarna (SE)
(72) Inventor: RENNER, Thomas, 89079 Ulm (DE)
(74) Representative: Finkele, Rolf
(86) International application number: PCT/EP2022/085669
(87) International publication number: WO 2023/232278

(56) References cited:
- WO-A2-2012/104274
- US-A- 3 482 591
- US-B2- 6 708 712

## Description

### TECHNICAL FIELD

The present disclosure relates to a pressure reducer. More specifically, the present disclosure relates to a compact design of the pressure reducer.

### BACKGROUND

Pressure reducers are found in many common domestic and industrial applications. For example, pressure reducers are used in gas grills to regulate propane, in home heating furnaces to regulate natural gases, in medical and dental equipment to regulate oxygen and anesthesia gases, in pneumatic automation systems to regulate compressed air, in engines to regulate fuel and in gardening systems to regulate irrigation among other application. As this partial list demonstrates there are numerous applications for pressure reducers yet, in each of them, the pressure reducers provide the same function. The pressure reducers reduce a supply (or inlet) pressure to a lower outlet pressure and work to maintain this outlet pressure despite fluctuations in the inlet pressure. The reduction of the inlet pressure to the lower outlet pressure is the key characteristic of the pressure reducers.

The pressure reducer includes a compression spring, a piston rod, and a diaphragm operatively coupled with the piston rod in a pressure reducer chamber. These components counteract fluid pressure and thereby control or regulate the outlet pressure of the pressure reducer. Further, a strength of the compression spring influences a maximum length of the pressure reducer as a strong compression spring requires a lot of installation space. Thus, there is a need for an intelligent spring design for the pressure reducer, which may substantially reduce the length of the pressure reducer without compromising with the strength of the spring and without affecting the overall working and efficiency of the pressure reducer.

An example of a pressure reducer with intelligent spring design is provided in United States patent 6,708,712 (hereinafter referred to as '712 reference). The '712 reference provides a pressure regulator having a disc spring. The pressure regulator includes a valve having a movable device that is positioned to control fluid flow through the pressure regulator. Downstream fluid pressure produces a first force acting on the movable device to close the valve to block fluid flow through the pressure regulator. The disc spring produces a second force that acts on the movable device to open the valve to enable fluid to flow through the pressure regulator. However, the '712 seems short of disclosing the spring associated with the pressure reducer that may contribute to improve the stability of a few components within the pressure reducer in addition to providing forces for guiding the motion of the piston rod (or the movable member).

A further exemplary pressure reducer is disclosed in the PCT patent application WO 2012/104274 A2 (hereinafter referred to as the '274 reference). The '274 reference discloses a gas pressure and/or flow control device comprising a body, an actuating rod for actuating first gas shut-off means, sealing means between the body and the rod allowing movement of the rod, biasing means exerting an elastic force on the actuating rod, wherein the biasing means comprise a disk spring arranged concentrically with the rod, and wherein the sealing means comprise a first gas tight membrane attached to the body and to the rod. The first membrane is generally circular with a central hole. Its outer periphery is attached to the body and its inner periphery is attached to the rod. The disk spring is placed on the membrane so as to urge the rod downwardly in the sense of opening the shut-off valve of a first stage. The membrane and the disk spring can be held in place in their seat in the body by a crimping action of body material on an outer periphery of the disk spring respectively the membrane. The rod comprises a shoulder portion for supporting the inner opening respectively periphery of the membrane which is held in place by a crimping action of a collar formed at the upper or distal end of the rod. A lower surface of the collar holds the washer against the membrane. Further the legs of the disk spring are in contact with an upper surface of the rounded collar of the rod, thus allowing a direct contact with minimum frictional forces. Hence, the '274 reference unambiguously discloses that the membrane and the disk spring are crimped together at their outer peripheries, but are distanced to each other on the inner periphery respectively over their radial extension. Additionally, the diaphragm is supported by the housing respectively the shoulder portion as well as the collar. Furthermore, the '274 reference discloses that the disk spring solely functions for imparting forces on the rod. However, the '274 reference seems short of disclosing a spring associated with the pressure reducer that may contribute to improve the stability of a few components within the pressure reducer in addition to providing forces for guiding the motion of the piston rod (or the movable member). Particularly, the '274 reference seems short of disclosing a disk spring which is configured at the same time for imparting forces on a piston rod as well as for operatively supporting a diaphragm.

A further exemplary pressure reducer is disclosed in US patent application US 3,482,591 A1 (hereinafter referred to as '591 reference). The '591 reference discloses a pressure regulator valve assembly comprising a housing within which there is disposed a valve and a movable diaphragm with and against which is disposed a cup-shaped backing plate. A disc spring acts through the cup-shaped backing plate to bias the diaphragm in a direction to unseat the valve. One side of the diaphragm fluidly communicates with a regulating chamber and the other side of the diaphragm is exposed to a reference chamber which communicates with the ambient. A cover portion of the housing clamps the periphery of the diaphragm, thus providing a seal at the diaphragm's periphery. The diaphragm has a central aperture through which a hollow stem projects. The spring disc has a central aperture in which a further stem is fixedly secured so as to preclude relative rotation. The further stem is moved axially in and out, thereby changing the bias on the disc spring to select the regulating pressure. Hence, the '591 reference unambiguously discloses that the spring disc is used to select the regulating pressure. Additionally, the '591 reference discloses that the diaphragm is supported over its radial extension by the cup-shaped backing plate. However, the '591 reference seems short of disclosing the spring associated with the pressure reducer that may contribute to improve the stability of a few components within the pressure reducer in addition to providing forces for guiding the motion of the piston rod (or the movable member). Particularly, the '591 reference seems short of disclosing a disc spring which is configured at the same time for imparting forces on a piston rod as well as for supporting a diaphragm.

Thus, there is a need for an improved design of the pressure reducer such that the pressure reducer includes the spring that improves the overall stability and performance of the pressure reducer in addition to executing its general application of imparting the forces to the piston rod for guiding the motion of the piston rod.

### SUMMARY

In view of the above, it is an objective of the present invention to solve or at least reduce the drawbacks discussed above. The objective is at least partially achieved by a pressure reducer for reducing a fluid pressure. The pressure reducer includes a pressure reducer body defining at least one pressure reducer chamber. The pressure reducer chamber includes an inlet section and an outlet section fluidly coupled with the inlet section such that the inlet section and the outlet section allow inlet and outlet of the fluid respectively. The pressure reducer chamber further includes a disc spring defining an inner diameter and an outer diameter. A piston rod is coupled with the disc spring and a diaphragm is operatively coupled with the piston rod. The pressure reducer is characterized in that the disc spring operatively supports the diaphragm and requires less space for installation in the pressure reducer chamber, and wherein the disc spring is configured to impart forces on the piston rod as well as to support the diaphragm.

Thus, the present disclosure provides an improved pressure reducer that advantageously includes the disc spring coupled with the piston rod. The disc spring is designed to provide the strength like that provided by a conventional compression spring. Further, the disc spring allows for compact or short design of the pressure reducer as the disc spring requires relatively very less installation space inside the pressure reducer when compared to the installation space required by a compression spring. The disc spring also serves as support for the diaphragm and prevents the diaphragm from slipping out due to fluid force. Further, the disc spring is easy, cost-effective, and timesaving in manufacturing.

According to an embodiment of the present disclosure, the disc spring is a slotted disc spring. The slotted disc spring defines slots on the inner diameter and the outer diameter such that the slotted disc spring is adapted to allow the piston rod to exhibit a stroke of 3 mm. The slots in the slotted disc spring improves its flexibility and allows the piston rod to exhibit an oscillating motion within the pressure reducer chamber.

According to an embodiment of the present disclosure, the slotted disc spring is adapted to engage with an annular groove in the piston rod. Further, the pressure reducer body defines an annular recess for supporting the slotted disc spring. Thus, the slotted disc spring is installed within the pressure reducer chamber in a stable manner via virtue of the annular groove in the piston rod and the annular recess in the pressure reducer body.

According to an embodiment of the present disclosure, the pressure reducer generates a constant output pressure of 4 bars. Further, in some embodiments, the pressure reducer generates a constant output pressure of 1.5 bars. The constant output pressure may be pre-determined and preset during the manufacturing of the pressure reducer according to the application requirements of the pressure reducer. For example, the constant output pressure of 1.5 bars is well suited and optimal for the operation of drip heads and spray nozzles used for gardening operations.

According to an embodiment of the present disclosure, a valve selectively allows and disallows passage of fluid via the inlet section. The valve selectively allows the passage of fluid to the outlet section such as to maintain a constant output pressure of the pressure reducer. The piston rod oscillates to momentarily block the supply of fluid from the inlet section towards the outlet section.

According to an embodiment of the present disclosure, the pressure reducer is used for drip-irrigation. The pressure reducer of the present disclosure finds its application with the gardening operations such as, but not limited to, drip-irrigation. However, the pressure reducer of the present disclosure is not restricted with its application area. The pressure reducer may conveniently and efficiently be used for any domestic or industrial application.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a pressure reducer assembly, in accordance with an aspect of the present disclosure;
**FIG. 2** shows a cross-section view of a pressure reducer assembly, in accordance with an aspect of the present disclosure;
**FIG. 3A** shows a perspective view of a slotted disc spring, in accordance with an aspect of the present disclosure;
**FIG. 3B** shows a perspective view of a slotted disc spring and a piston rod, in accordance with an aspect of the present disclosure;
**FIG. 3C** shows a perspective view of a slotted disc spring and a diaphragm coupled with a piston rod, in accordance with an aspect of the present disclosure;
**FIG. 3D** shows a cross-section view of a pressure reducer, in accordance with an aspect of the present disclosure;
**FIG. 4A** shows a cross-section view of a pressure reducer with a slotted disc spring, in accordance with an aspect of the present disclosure;
**FIG. 4B** shows a cross-section view of a pressure reducer with a compression spring, in accordance with an aspect of the present disclosure;
**FIG. 5A** shows a cross-section view of a pressure reducer showing an upward stroke of a piston rod; and
**FIG. 5B** shows a cross-section view of a pressure reducer showing a downward stroke of a piston rod, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

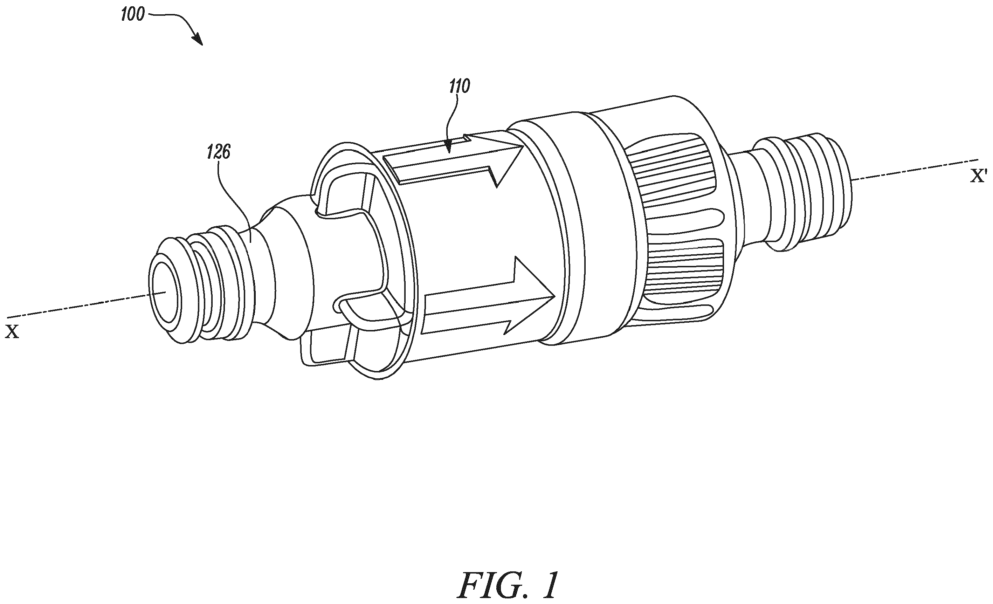

**FIG 1** illustrates a pressure reducer **100.** The pressure reducer **100** of the present disclosure is used for reducing a fluid pressure of the fluid intended to be used for drip-irrigation or other gardening operations. However, the pressure reducer **100** of the present disclosure is not restricted with its application area. The pressure reducer **100** may conveniently and efficiently be used for any other domestic or industrial applications.

Further, the fluid used with the pressure reducer **100** may be a liquid (say water) or a gas (say air) depending on the application requirement of the pressure reducer **100.** The fluid may selectively be provided by a fluid source (not shown) at a pressure equal to more than the output pressure requirements of the application for which the pressure reducer **100** is used.

The fluid source may advantageously be provided with a valve such as to regulate the outflow of the fluid from the fluid source. Further, the fluid source may be provided with an automatic operatable accessory that may automatically regulate the outflow of the fluid from the fluid source. For example, the fluid source may be provided with a watering computer when the fluid is a water. The watering computer may allow and regulate outflow of the water from the fluid source (or water source) depending upon the time of the day, preset water outflow timings, among other factors.

The fluid source may be fluidly coupled to the pressure reducer **100** via a hose or any other means commonly known and understood in the related art without limiting the scope of the present disclosure. In some embodiments, the fluid source may be fluidly coupled to a plurality of pressure reducers **100** by way of fluid distributors (commonly available in the related art).

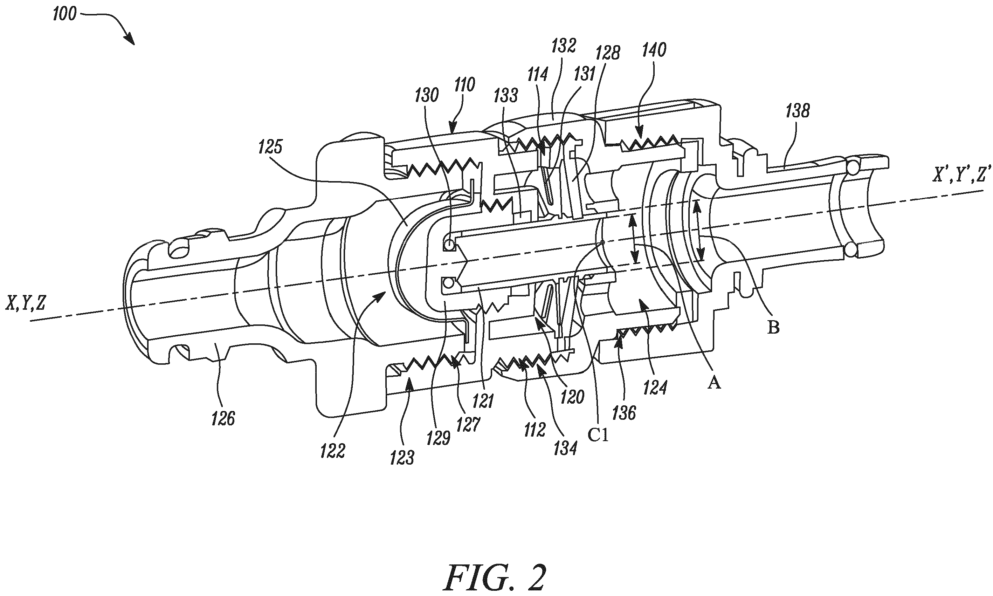

The pressure reducer **100,** as illustrated in **FIGS. 1** and **2****,** includes a pressure reducer body **110.** The pressure reducer body **110** of the present disclosure is a cylindrical body having a central axis **X-X'** along a longitudinal direction of the pressure reducer **100.** However, in actual implementation of the present disclosure, the pressure reducer body **110** may have any other shape without restricting the scope of the present disclosure. The pressure reducer body **110** may be made of brass, plastic, and aluminum. Various grades of stainless steel (such as 303, 304, and 316) may also be used for the manufacture of the pressure reducer body **110.** However, any other material available to handle various fluids and operating environments may be employed for making or manufacturing the pressure reducer body **110.** Further, any suitable manufacturing process may be employed for manufacturing of the pressure reducer body **110** without restricting the scope of the present disclosure.

The pressure reducer body **110** defines at least one pressure reducer chamber **120.** The pressure reducer chamber **120** includes an inlet section **122** and an outlet section **124** fluidly coupled with the inlet section **122** such that the inlet section **122** and the outlet section **124** allow inlet and outlet of the fluid respectively. The inlet section **122** is defined along a central axis **Y-Y'** and the outlet section **124** is defined along a central axis **Z-Z'.** In some embodiments, as shown in **FIG. 2****,** the central axes **Y-Y', Z-Z'** and **X-X'** coincide with each other along the longitudinal direction of the pressure reducer **100.** In some embodiments, the central axes **Y-Y', Z-Z'** and **X-X'** may be parallel to each other but may not necessarily coincide with each other. In some embodiments, the central axes **Y-Y**', **Z-Z'** and the **X-X'** may have any other angular orientation with respect to each other or with respect to the longitudinal direction of the pressure reducer **100** without restricting the scope of the present disclosure in any manner.

The inlet section **122** is fluidly coupled to the fluid source via a coupling nipple **126,** as shown in **FIGS. 1** and **2****.** The coupling nipple **126** may advantageously be designed in a manner such that the coupling nipple **126** selectively allows passage of fluid therethrough (received from the fluid source) only when it is fluidly coupled with the inlet section **122** of the pressure reducer **100.** Such a design of the coupling nipple **126** may substantially prevent fluid leakages when the pressure reducer **100** is not operational or not in use. In some embodiments, the inlet section **122** may be sealingly coupled to the coupling nipple **126.** The sealing may be provided by a sealing gasket, O-ring, or any other known and easily available sealing means (or sealing element).

The inlet section **122** further includes a threaded portion **123** such that the threaded portion **123** threadedly engages with a complimentary threaded portion **127** of the coupling nipple **126.** Thus, in the preferred embodiment of the present disclosure, the inlet section **122,** and the coupling nipple **126** are threadedly engaged or coupled with each other. However, in actual implementation of the present disclosure, the fluid coupling between the inlet section **122** and the coupling nipple **126** may be accomplished by any suitable means known and understood in the related art.

In the preferred embodiment of the present disclosure, as illustrated in **FIG. 2****,** the inlet section **122** further includes a filter element **125.** The filter element **125** may be operatively coupled to the inlet section **122** such that the filter element **125** filters the fluid received from the fluid source before it enters the pressure reducer chamber **120.** The filter element **125** prevents clogging of the inlet section **122** and thereby promotes smooth operations of the pressure reducer **100.** The filter element **125** may be coupled to the inlet section **122** by any means known in the related art. For example, the filter element **125** may be glued to the inlet section.

Further, the filter element **125** may have any shape, size, and type as per the application requirements. In some embodiments, the filter element **125** may be a surface filter made of closely woven fabric or treated paper with a uniform pore size. Fluid from the fluid source flows through the pores of the filter element **125** and contaminants are stropped on the filter element surface. In some embodiments, the filter element **125** may be a depth filter made of layers of fabric or fibers, which provide many tortuous paths for the fluid to flow through. The pores or passages are larger than the rated size of the filter element **125** for particles to be retained in the depth of the media rather than on the surface. In some embodiments, the filter element **125** may be of the 5-micron, woven mesh, micronic, porous metal, or magnetic type. The micronic and 5-micron elements have non-cleanable filter media and may be disposed of when they are removed whereas the porous metal, woven mesh and magnetic filter elements are designed to be cleaned and reused.

Further, as illustrated in **FIG. 2****,** the inlet section **122** includes a valve **129.** The valve **129** selectively allows the fluid from the fluid source to pass through the pressure reducer chamber **120.** The valve **129** selectively allows and disallows passage of fluid via the inlet section **122.** The valve **129** selectively allows the passage of fluid to the outlet section **124** such as to maintain constant output pressure of the pressure reducer **100.** The valve **129** is located downstream of the filter element **125** in the direction of the fluid flow. The valve **129** may be coupled to the inlet section **122** by any suitable means known in the art. However, in the preferred embodiment, the valve **129** is screwed into the inlet section **122.** The screw coupling between the valve **129** and the inlet section **122** allows for movement of the valve **129** relative to the inlet section along the longitudinal direction of the pressure reducer **100.** The movement of the valve **129** along the longitudinal direction of the pressure reducer **100** may also help in adjusting the constant output pressure generated by the pressure reducer **100.**

In some embodiments, the valve **129** may be along the central axis **X-X'** of the pressure reducer body **110.** In some embodiments, the valve **129** may be along the central axis **Y-Y'** of the inlet section **122.** In some embodiments, the valve **129** may be parallel to the central axis **X-X'** of the pressure reducer body **110.** In some embodiments, the valve **129** may be offset to the central axis **X-X'** of the pressure reducer body **110.** In some embodiments, the valve **129** may be at an angle to the central axis **X-X'** of the pressure reducer body **110.** In some embodiments, the valve **129** may be parallel to the central axis **Y-Y'** of the inlet section **122.** In some embodiments, the valve **129** may be offset to the central axis **Y-Y'** of the inlet section **122.** In some embodiments, the valve **129** may be at an angle to the central axis **Y-Y'** of the inlet section **122.** The valve **129** may have orientation relative to the longitudinal direction of the pressure reducer **100** without restricting the scope of the present disclosure in any manner.

The valve **129** further includes a seal **130.** The seal **130** may be O-ring or any other type of seal generally available in the related art. In some embodiments, the seal **130** may be a flat seal. In some embodiments, the seal **130** may be a radial seal, i.e., providing sealing of the fluid in the radial direction.

With continued reference to **FIG. 2****,** the pressure reducer chamber **120** further includes a spring-operated piston rod **121.** The piston rod **121** is a hollow rod allowing passage of the fluid of which the pressure is to be reduced in the pressure reducer **100.** The piston rod **121** has a center **"C1"** along the central axis **X-X'** when the piston rod **121** is assembled in the pressure reducer chamber **120.** Further, the piston rod **121** has an inner diameter **"A"** and an outer diameter **"B".** In some embodiments, the inner diameter **"A"** may be 0.6 times of the outer diameter **"B".** In some embodiments, the inner diameter **"A"** may be 0.45 times of the outer diameter **"B".** In some embodiments, the inner diameter **"A"** may be equivalent to the outer diameter **"B".**

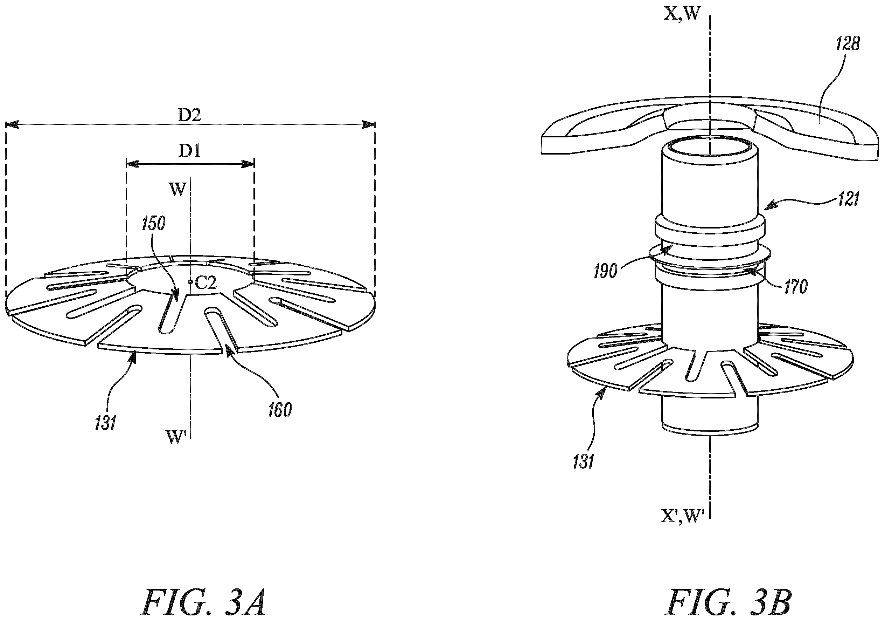

The spring **131** is a disc spring **131** such that the piston rod **121** is coupled with the disc spring **131.** The disc spring **131** is compact in structure and easy to manufacture. In the preferred embodiment of the present disclosure, the disc spring is a slotted disc spring **131** and same will be used in the rest of the disclosure for understanding of the present disclosure. The slotted disc spring **131** is used to operate the piston rod **121** in the pressure reducer chamber **120.** As illustrated in **FIG. 3A****,** the slotted disc spring **131** defines an inner diameter **"D1",** an outer diameter **"D2"** and a center **"C2"** defined along a central axis **W-W'.** The inner diameter **"D1"** and the outer diameter **"D2"** are the inner and the outer diameter of the slotted disc spring **131** when it is not coupled to the piston rod **121.** The relationship between the inner diameter **"D1"** and the outer diameter **"D2"** may depend on variety of factors such as, but not limited to, dimensions of the pressure reducer body **110,** the pressure reducer chamber **120,** the piston rod **121,** the slotted disc spring **131** strength requirements, the piston rod **121** stroke requirements, among other factors.

In some embodiments, the outer diameter **"D2"** may be twice the inner diameter **"D1".** In some embodiments, the outer diameter **"D2"** may be thrice the inner diameter **"D1".** In some embodiments, the outer diameter **"D2"** may be 1.5 times the inner diameter **"D1".** In some embodiments, the inner diameter **"D1"** of the slotted disc spring **131** may be equivalent to the outer diameter **"B"** of the piston rod **121.** In some embodiments, the inner diameter **"D1"** of the slotted disc spring **131** may be less than outer diameter **"B"** of the piston rod **121.** In some embodiments, the inner diameter **"D1"** of the slotted disc spring **131** may be equivalent to the inner diameter **"A"** of the piston rod **121.** In some embodiments, the inner diameter **"D1"** of the slotted disc spring **131** may be less than outer diameter **"B"** but greater than the inner diameter **"A"** of the piston rod **121.** In some embodiments, the outer diameter **"D2"** of the slotted disc spring **131** may be twice the outer diameter **"B"** of the piston rod **121.** However, the inner diameter **"D1",** the outer diameter **"D2",** the inner diameter **"A"** and the outer diameter **"B"** may have any other relation relative to each other without limiting the scope of the present disclosure in any manner.

Further, as illustrated in **FIG. 3A****,** the slotted disc spring **131** defines slots **150, 160** on the inner diameter **"D1"** and the outer diameter **"D2"** respectively. The slots **150, 160** creates a lever which works on the unslotted portion of the spring. This has an effect of reducing the spring load and increasing the deflection of the spring.

In some embodiments the slots **150, 160** (as shown in **FIG. 3A****)** may be a plurality of equidistant slots on the surface of the slotted disc spring **131.** In some embodiments, the slots **150** may be equidistant slots on the surface of the slotted disc spring **131** but the slots **160** may be formed at unequal distances on the surface of the slotted disc spring **131.** In some embodiments, the slots **160** may be equidistant slots on the surface of the slotted disc spring **131** but the slots **150** may be formed at unequal distances on the surface of the slotted disc spring **131.** In some embodiments, the slots **150, 160** may be formed at unequal distances on the surface of the slotted disc spring **131.**

In some embodiments, the plurality of slots **150** may have same shapes and sizes as the plurality of slots **160.** In some embodiments, the plurality of slots **150** may have shapes and sizes different to the plurality of slots **160.** In some embodiments, all the plurality of slots **150** may have same shapes and sizes. In some embodiments, all the plurality of slots **150** may have different shapes and sizes. In some embodiments, a few of the plurality of slots **150** may have same shapes and sizes. In some embodiments, all the plurality of slots **160** may have same shapes and sizes. In some embodiments, all the plurality of slots **160** may have different shapes and sizes. In some embodiments, a few of the plurality of slots **160** may have same shapes and sizes. In some embodiments, there may slots on the on the inner diameter **"D1"** only. In some embodiments, there may slots on the on the outer diameter **"D2"** only.

The design of the slotted disc spring **131** may have any kind of arrangement as discussed above as per the application requirement of the slotted disc spring **131.** The design may be such that the slotted disc spring **131** may have strength enough to operate the piston rod **121** for efficient working or operation of the pressure reducer **100.** Further, the material of the slotted disc spring **131** may be such that it reacts to loading (load due to the fluid in the pressure reducer **100)** by elastic deformation. The slotted disc spring **131** may be formed from steel or any other suitable material known and understood in the related art. Further, the slotted disc spring **131** may be formed from manufacturing processes, such as, but not limited to, stamping. The stamping process is cost-effective, fast and demands little labor as well as machine operation. Further, the stamping process reduces material wastage, improves accuracy and may be automated.

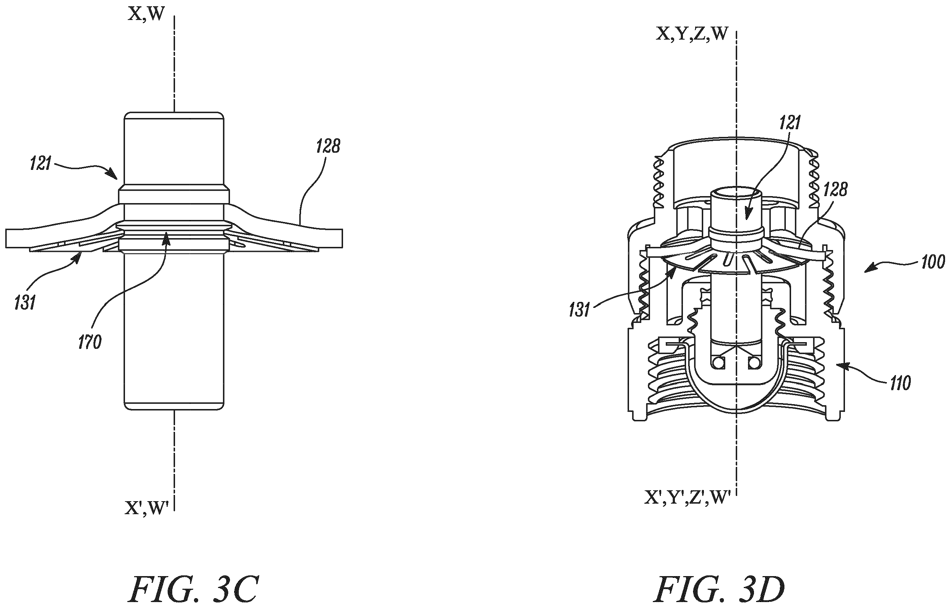

Further, as illustrated in **FIGS. 3B** and **3C****,** the slotted disc spring **131** is forced over the piston rod **121** by any means known in the art so that the central axis **X-X'** coincides with the central axis **W-W'.** In some embodiments, as shown in **FIG. 3D****,** the central axis **W-W'** coincides with the central axes **X-X', Y-Y'** and **Z-Z'.** In some embodiments, the central axis **W-W'** may coincide with the central axis **X-X'** and one of the central axes **Y-Y'** or **Z-Z'.** In some embodiments, the central axis **W-W'** may coincide only with the central axis **X-X'.** The slotted disc spring **131** of the present disclosure is adapted to allow the piston rod **121** to exhibit a stroke of 3 mm during the working of the pressure reducer **100.** However, in actual implementation of the present disclosure, the stroke length may be varied as per the application requirements during manufacturing of the pressure reducer **100** by varying the design parameters of the slotted disc spring **131.**

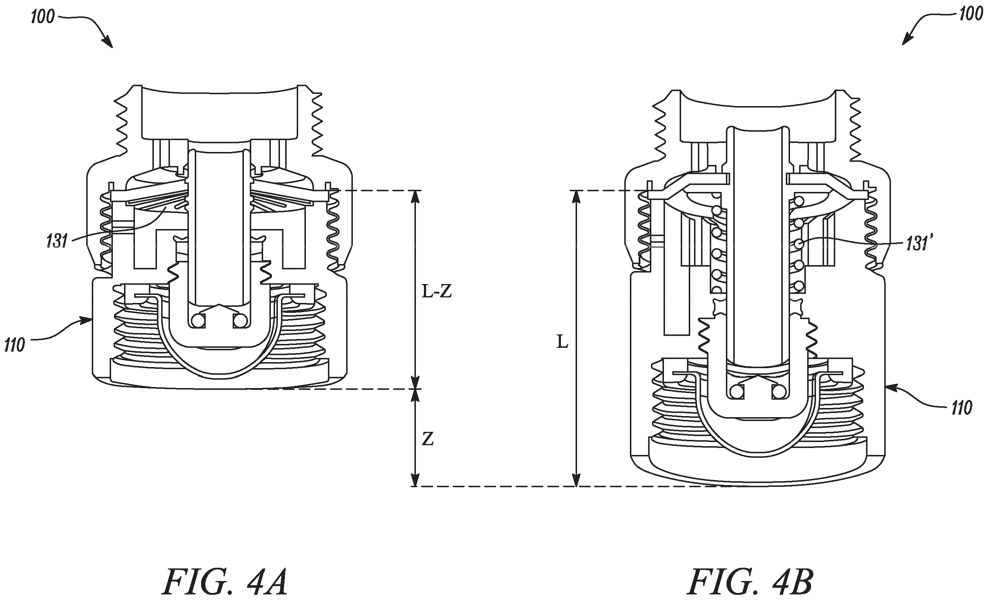

The slotted disc spring **131,** as illustrated in **FIG. 4A****,** allows for compact or short design of the pressure reducer **100** as the slotted disc spring **131** requires relatively very less installation space inside the pressure reducer **100** when compared to the installation space required by the compression spring **131'** (as shown in **FIG. 4B****)** providing equal strength. The length **"L"** of the pressure reducer body **110** is reduced by a magnitude **"Z"** when the compression spring **131'** within the pressure reducer body **110** is advantageously replaced by the slotted disc spring **131.** The length **"L"** of the pressure reducer body **110** is reduced to length **"L - Z"** when the compression spring **131'** within the pressure reducer body **110** is replaced by the slotted disc spring **131.** The magnitude **"Z"** depends on the dimensions of the length of the slotted disc spring **131.** The magnitude **"Z"** may vary as per the strength requirement of the slotted disc spring **131** to be used with the pressure reducer **100.**

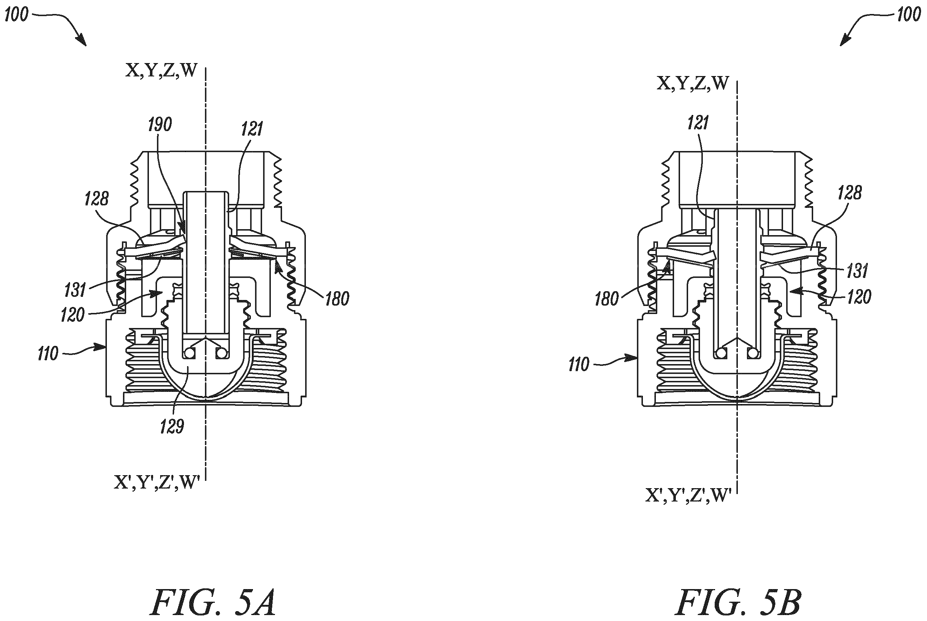

Further, as illustrated in **FIGS. 3B** and **3C****,** the slotted disc spring **131** is adapted to engage with an annular groove **170** in the piston rod **121.** The annular groove **170** allows for easy installation of the slotted disc spring **131** with the piston rod **121.** The annular groove **170** allows for easy and secure coupling of the slotted disc spring **131** with the piston rod **121.** Further, an annular recess **180,** as illustrated in **FIGS. 5A** and **5B****,** is defined by the pressure reducer body **110** for supporting the slotted disc spring **131.** The annular recess **180** may additionally assist in centering of the slotted disc spring **131** in the pressure reducer chamber **120.** The annular recess **180** provides linear support to the slotted disc spring **131.** Thus, the slotted disc spring **131** is installed within the pressure reducer chamber **120** in a stable manner via virtue of the annular groove **170** in the piston rod **121** and the annular recess **180** in the pressure reducer body **110.**

Further, the piston rod **121** (as illustrated in **FIGS. 2****,** **3B****,** **3C, 3D****,** **5A** and **5B****)** may be concentric with the pressure reducer body **110** or the pressure reducer chamber **120.** In some embodiments, the piston **121** may have any other orientation relative to the earlier defined central axes **X-X', Y-Y'** and **Z-Z'** in accordance with the operational feasibility of the pressure reducer **100.** The piston rod **121** of the present disclosure is configured to oscillate back and forth substantially within the pressure reducer chamber **120.** The back-and-forth motion of the piston rod **121** is due to differential force experienced by the piston rod **121.** The force experienced by the piston rod **121** is due to the slotted disc spring **131** and a diaphragm **128** operatively coupled with the piston rod **121** in the pressure reducer chamber **120.**

The diaphragm **128** is coupled to the piston rod **121** by virtue of a groove **190** in the piston rod **121.** The diaphragm **128** is clamped on the annular groove **190** formed on an outer surface of the piston rod **121.** The diaphragm **128** is additionally supported by the slotted disc spring **131.** The slotted disc spring **131** operatively supports the diaphragm **128.** Thus, the spring **131** of the present disclosure is advantageously utilized in the pressure reducer chamber **120** for imparting forces on the piston rod **121** as well as for supporting the diaphragm **128** whereas the spring **131** in the prior art only impart forces on the piston rod **121.**

The slotted disc spring **131** further prevents slippage of the diaphragm **128** away from the piston rod **121** due to the fluid pressure or force in the pressure reducer **100.** The slotted disc spring **131** provides a resting surface to the diaphragm **128** without any height offset. In some embodiments, the shape and size of the diaphragm **128** may be similar to the slotted disc spring **131.** In some embodiments, the shape and size of the diaphragm **128** may be different to that of the slotted disc spring **131.** In some embodiments, there may be more than one slotted disc spring **131** for supporting the diaphragm **128.** In some embodiments, the slotted disc spring **131** may be placed on a plane parallel to a plane of the diaphragm **128.** In some embodiments, the slotted disc spring **131** may be placed on the plane at an angle to the plane of the diaphragm **128.**

In some embodiments, the diaphragm **128** may be made of material similar to that of the slotted disc spring **131.** In some embodiments, the diaphragm **128** may be made of material different to that of the slotted disc spring **131.** In some embodiments, the method or process for manufacturing the diaphragm **128** and the slotted disc spring **131** may be same. In some embodiments, the method or process for manufacturing the diaphragm **128** and the slotted disc spring **131** may be different. The process of manufacturing may preferably be stamping due to the advantages as already discussed above.

The direction of motion of the piston rod **121** at any particular time instant is governed by the direction of net force generated upon the piston rod **121** by the slotted disc spring **131** and the diaphragm **128.** For example, the piston rod **121** moves in upstream direction when the net force is in upstream direction due to higher magnitude of force generated by the diaphragm **128** relative to the force generated by the spring **131.**

The constant output pressure generated by the pressure reducer **100** may be adjusted by varying the initial distance or the gap between the piston rod **121** and the seal **130** during the manufacturing of the pressure reducer **100.** For example, the constant output pressure may be pre-determined and preset during the manufacturing of the pressure reducer according to the application requirements of the pressure reducer **100.** Some applications may demand the constant output pressure of 4 bars while other applications such as drip heads and spray nozzles used for gardening operations may demand the constant output pressure of 1.5 bars. Accordingly, the initial distance or the gap between the piston rod **121** and the seal **130** is increased for generating constant output pressure of 4 bars while it is comparatively reduced for generating constant output pressure of 1.5 bars.

With continued reference to **FIG. 2****,** the pressure reducer body **110** includes a first threaded portion **112** on its outside surface facing opposite to the pressure reducer chamber **120.** The first threaded portion **112** may be used for coupling the pressure reducer body **110** with other accessories of the pressure reducer **100.** The pressure reducer body **110** further includes a pressure compensation hole **114** in the first threaded portion **112.** The pressure compensation hole **114** ensures unrestricted mobility of the piston rod **121.** The pressure compensation hole **114** allows release of air pressure generated in the pressure reducer chamber **120** when the piston rod **121** moves in the upstream direction of the fluid flow in the pressure reducer **100.** The pressure compensation hole **114** allows air to escape from the pressure reducer chamber **120** when the piston rod **121** moves in the upstream direction of the fluid flow in the pressure reducer **100.** Conversely, the pressure compensation hole **114** allows suction of the surrounding air (external to the pressure reducer **100)** when the piston rod **121** moves in the downstream direction of the fluid flow in the pressure reducer **100.**

In some embodiments, the pressure compensation hole **114** is a circular hole. The hole is preferably circular as it is easy to drill a circular hole. Further, it substantially prevents material wastage when compared with manufacturing or producing holes of other shapes. However, the hole may have any other suitable shape without restricting the scope of the present disclosure.

In some embodiments, air in the pressure reducer chamber **120** surrounding the spring-operated piston rod **121** is sealed from the valve **129** using a sealing element **133.** The sealing element **133** prevents mixing of air in the pressure reducer chamber **120** with the fluid introduce in the pressure reducer **100** via the inlet section **122.** The sealing element **133** may be O-ring or any other commonly available sealing element known in the art without restricting the scope of the present disclosure.

Further, a flange **132** is sealingly coupled with the pressure reducer body **110** such that the sealing disallows the backflow of fluid past the outlet section **124.** The flange **132** is concentric with the pressure reducer body **110.** The diaphragm **128** seals the coupling between the flange **132** and the pressure reducer body **110.** The boundaries or the extremities of the diaphragm **128** are abutted or pressed between the flange **132** and the pressure reducer body **110,** thereby providing a fluid-tight sealing. The fluid tight sealing is the outcome of the contact pressure exerted on the diaphragm **128** due to the coupling between the flange **132** and the pressure reducer body **110.**

The sealing prevents or disallows the backflow of fluid past the outlet section **124,** thereby eliminating any possible leakage and improving the overall efficiency of the pressure reducer **100.** Further, the multiple usage or application of the diaphragm **128** means no separate sealing elements such as O-rings are required for the sealing. Hence, the pressure reducer **100** is easy to assemble with all its necessary components or accessories with further advantage of lower manufacturing expenses due to less components or material required for the assembly or manufacturing of the pressure reducer **100.** Further, due to less components, pressure reducer maintenance cost is also reduced. Furthermore, the sealing may prevent ingress of air in the outlet section **124,** thereby preventing mixing of air drawn-in from the compensation hole with the fluid (say liquid).

The flange **132** has a second threaded portion **134** complimentary to the first threaded portion **112** such that the pressure reducer body **110** and the flange **132** are threadedly coupled to each other through the first and the second threaded portion **112, 134.** The flange **132** further includes a third threaded portion **136.** The third threaded portion **136** is formed on an outer surface of the flange **132** contrary to the second threaded portion **134,** which is formed on an inner surface of the flange **132.** The third threaded portion **136** faces the pressure reducer body **110** while the second threaded portion **134,** faces away from the pressure reducer body **110** in an opposite direction.

The second threaded portion **134** couples the flange **132** with the pressure reducer body **110** whereas the third threaded portion **136** couples the flange **132** with a connector **138** (or a nipple **138).** The connector **138** may complete the pressure reducer assembly and may allow the fluid with the reduced pressure to be transported for various domestic and industrial applications. The coupling between the flange **132** and the connector **138** is a threaded coupling due to threaded engagement of the third threaded portion **136** and a threaded portion **140** of the connector **138.** However, in some embodiments, the coupling between the flange **132** and the connector **138** may be due to any other coupling means known and understood in the related art.

In operation, the fluid from the fluid source enters the pressure reducer **100** at high pressure from the inlet section **122.** The fluid is filtered using filter element **125** before it reaches the valve **129.** The valve **129** selectively allows the passage of the fluid towards the spring-operated hollow piston rod **121.** The fluid from the piston rod **121** flows outwards towards the flange **132** and finally towards the connector **138** for use with various domestic and industrial applications.

The pressure of the high-pressure fluid from the fluid source is reduced by the oscillating motion of the piston rod **121** (as shown in **FIGS. 5A** and **5B****)** substantially within the pressure reducer chamber **120.** The piston rod **121** oscillates (performs an upward stroke (as shown in **FIG. 5A****)** and a downward stroke (as shown in **FIG. 5B****)** to reduce the fluid pressure to the constant output pressure. The piston rod **121** momentarily block the supply of fluid (as shown in **FIG. 5B****)** from the inlet section **122** towards the outlet section **124.** The piston rod **121** blocks the supply of fluid by engagement with the seal **130** of the valve **129.** The seal **130** may axially or radially seal the piston rod **121** to prevent the fluid from entering the piston rod **121.**

The piston rod **121** momentarily blocks the supply of fluid from the inlet section **122** when it is pressed by the diaphragm **128** against the spring force towards the upstream direction of the fluid flow. Further, the fluid may also lose some energy when the fluid presses the diaphragm **128** such that diaphragm further presses the piston rod **121** to make it move towards the upstream direction of the fluid flow. This way, the high fluid pressure is reduced to the final output pressure.

Further, when the fluid pressure near the output section **124** is reduced to the final value, the slotted disc spring **131** may overcome the force of the diaphragm **128** such that the piston rod **121** moves in the downstream direction towards its original position. The oscillating movement of the piston rod **121** is assisted by the pressure compensation hole **114** as already discussed above.

Thus, the present disclosure provides an improved pressure reducer **100** that is simple in construction and easy to install. The pressure reducer **100** advantageously includes the slotted disc spring **131** coupled with the piston rod **121.** The slotted disc spring **131** is designed to provide the strength like that provided by a conventional compression spring **131'.** Further, the slotted disc spring **131** allows for compact or short design of the pressure reducer **100** as the slotted disc spring **131** requires relatively very less installation space inside the pressure reducer **100** when compared to the installation space required by the compression spring **131'.** The slotted disc spring **131** also serves as support for the diaphragm **128** and prevents the diaphragm **128** from slipping out due to fluid force. Further, the slotted disc spring **131** is easy, cost-effective, and timesaving in manufacturing.

### LIST OF ELEMENTS

- **100**: Pressure Reducer
- **110**: Pressure Reducer Body
- **112**: First Threaded Portion
- **114**: Pressure Compensation Hole
- **120**: Pressure Reducer Chamber
- **121**: Piston Rod
- **122**: Inlet Section
- **123**: Threaded Portion
- **124**: Outlet Section
- **125**: Filter Element
- **126**: Coupling Nipple
- **127**: Threaded Portion
- **128**: Diaphragm
- **129**: Valve
- **130**: Seal
- **131**: Spring/Disc Spring/Slotted Disc Spring
- **131'**: Compression Spring
- **132**: Flange
- **133**: Sealing Element
- **134**: Second Threaded Portion
- **136**: Third Threaded Portion
- **138**: Connector/Nipple
- **140**: Threaded Portion
- **150, 160**: Slots
- **170**: Annular Groove
- **180**: Annular Recess
- **190**: Groove
- **X-X'**: Central Axis
- **Y-Y'**: Central Axis
- **Z-Z'**: Central Axis
- **W-W'**: Central Axis
- **D1**: Inner Diameter
- **D2**: Outer Diameter
- **C1**: Center
- **C2**: Center
- **A**: Inner Diameter
- **B**: Outer Diameter
- **L**: Length
- **Z**: Magnitude

## Claims

1. A pressure reducer **(100)** for reducing a fluid pressure comprising:
a pressure reducer body **(110)** defining at least one pressure reducer chamber **(120),** the pressure reducer chamber **(120)** including:
an inlet section **(122)** and an outlet section **(124)** fluidly coupled with the inlet section **(122)** such that the inlet section **(122)** and the outlet section **(124)** allow inlet and outlet of the fluid respectively;
a disc spring **(131)** defining an inner diameter **(D1)** and an outer diameter **(D2);**
a piston rod **(121)** coupled with the disc spring **(131),** wherein the piston rod (121) is a hollow rod allowing passage of the fluid of which the pressure is to be reduced in the pressure reducer (100), and wherein the piston rod (121) comprises on an outer surface an annular groove (170) and a further annular groove (190); and
a diaphragm **(128)** operatively coupled with the piston **rod (121);**
**characterized in that:**
the disc spring **(131)** operatively supports the diaphragm **(128),**
wherein the disc spring **(131)** is configured to impart forces on the piston rod **(121)** as well as to support the diaphragm **(128);**
wherein the disc spring (131) is engaged with the annular groove (170);
wherein the diaphragm (128) is clamped on the further annular groove (190); and
wherein the disc spring (131) provides a resting surface to the diaphragm (128) without a height offset.

2. The pressure reducer **(100)** of claim 1,
wherein the disc spring **(131)** is a slotted disc spring **(131).**

3. The pressure reducer **(100)** of claim 2,
wherein the slotted disc spring **(131)** defines slots **(150, 160)** on the inner diameter and the outer diameter respectively.

4. The pressure reducer **(100)** of claims 2-3,
wherein the slotted disc spring **(131)** is adapted to allow the piston rod **(121)** to exhibit a stroke of 3 mm.

5. The pressure reducer **(100)** of claims 2-4,
wherein the slotted disc spring **(131)** is adapted to engage with an annular groove **(170)** in the piston rod **(121).**

6. The pressure reducer **(100)** of claims 2-5,
wherein the pressure reducer body **(110)** defines an annular recess **(180)** for supporting the slotted disc spring **(131).**

7. The pressure reducer **(100)** of any one of the preceding claims,
wherein the pressure reducer **(100)** generates a constant output pressure of 4 bars.

8. The pressure reducer **(100)** of any one of the preceding claims,
wherein the pressure reducer **(100)** generates a constant output pressure of 1.5 bars.

9. The pressure reducer **(100)** of any one of the preceding claims,
wherein a valve **(129)** selectively allows and disallows passage of fluid via the inlet section **(122).**

10. The pressure reducer **(100)** of any one of the preceding claims,
wherein the pressure reducer **(100)** is used for drip-irrigation.

## Patentansprüche

1. Druckminderer **(100)** zum Mindern eines Fluiddrucks, umfassend:
einen Druckmindererkörper **(110),** der mindestens eine Druckmindererkammer **(120)** definiert, wobei die Druckmindererkammer **(120)** einschließt:
einen Einlassabschnitt **(122)** und einen Auslassabschnitt **(124),** der mit dem Einlassabschnitt **(122)** derart fluidisch gekoppelt ist, dass der Einlassabschnitt **(122)** und der Auslassabschnitt **(124)** einen Einlass bzw. einen Auslass des Fluids ermöglichen;
eine Scheibenfeder **(131),** die einen Innendurchmesser **(D1)** und einen Außendurchmesser **(D2)** definiert;
eine Kolbenstange **(121),** die mit der Scheibenfeder **(131)** gekoppelt ist, wobei die Kolbenstange (121) eine hohle Stange ist, die den Durchgang des Fluids ermöglicht, dessen Druck in dem Druckminderer (100) gemindert werden soll, und wobei die Kolbenstange (121) an einer Außenoberfläche eine Ringnut (170) und eine weitere Ringnut (190) umfasst; und
eine Membran **(128),** die mit der Kolbenstange **(121)** wirkgekoppelt ist;
**dadurch gekennzeichnet, dass:**
die Scheibenfeder **(131)** die Membran **(128)** wirkstützt,
wobei die Scheibenfeder **(131)** konfiguriert ist, um Kräfte auf die Kolbenstange **(121)** auszuüben sowie die Membran **(128)** zu stützen;
wobei die Scheibenfeder (131) mit der Ringnut (170) in Eingriff steht;
wobei die Membran (128) an der weiteren Ringnut (190) angeklemmt ist; und
wobei die Scheibenfeder (131) eine Auflageoberfläche für die Membran (128) ohne einen Höhenversatz bereitstellt.

2. Druckminderer **(100)** nach Anspruch 1,
wobei die Scheibenfeder **(131)** eine geschlitzte Scheibenfeder **(131)** ist.

3. Druckminderer **(100)** nach Anspruch 2,
wobei die geschlitzte Scheibenfeder **(131)** Schlitze **(150, 160)** an dem Innendurchmesser bzw. an dem Außendurchmesser definiert.

4. Druckminderer **(100)** nach Ansprüchen 2 bis 3,
wobei die geschlitzte Scheibenfeder **(131)** ausgelegt ist, um der Kolbenstange **(121)** zu ermöglichen, einen Hub von 3 mm aufzuweisen.

5. Druckminderer **(100)** nach Ansprüchen 2 bis 4,
wobei die geschlitzte Scheibenfeder **(131)** ausgelegt ist, um mit einer Ringnut **(170)** in der Kolbenstange **(121)** in Eingriff zu stehen.

6. Druckminderer **(100)** nach Ansprüchen 2 bis 5,
wobei das Druckminderergehäuse **(110)** eine ringförmige Aussparung **(180)** zum Stützen der geschlitzten Scheibenfeder **(131)** definiert.

7. Druckminderer **(100)** nach einem der vorstehenden Ansprüche,
wobei der Druckminderer **(100)** einen konstanten Ausgangsdruck von 4 bar erzeugt.

8. Druckminderer **(100)** nach einem der vorstehenden Ansprüche,
wobei der Druckminderer **(100)** einen konstanten Ausgangsdruck von 1,5 bar erzeugt.

9. Druckminderer **(100)** nach einem der vorstehenden Ansprüche,
wobei ein Ventil **(129)** selektiv den Durchgang von Fluid über den Einlassabschnitt **(122)** zulässt und nicht zulässt.

10. Druckminderer **(100)** nach einem der vorstehenden Ansprüche,
wobei der Druckminderer **(100)** für Tropfbewässerung verwendet wird.

## Revendications

1. Réducteur de pression **(100)** permettant de réduire une pression de fluide comprenant :
un corps de réducteur de pression **(110)** définissant au moins une chambre de réducteur de pression **(120),** la chambre de réducteur de pression **(120)** comportant :
une section d'entrée **(122)** et une section de sortie **(124)** couplée fluidiquement avec la section d'entrée **(122)** de telle sorte que la section d'entrée **(122)** et la section de sortie **(124)** permettent une entrée et une sortie du fluide respectivement ;
un ressort à disque **(131)** définissant un diamètre interne **(D1)** et un diamètre externe **(D2)** ;
une tige de piston **(121)** accouplée au ressort à disque **(131),** dans lequel la tige de piston (121) est une tige creuse permettant le passage du fluide dont la pression doit être réduite dans le réducteur de pression (100), et dans lequel la tige de piston (121) comprend sur une surface extérieure une rainure annulaire (170) et une rainure annulaire supplémentaire (190) ; et
un diaphragme **(128)** accouplé de manière fonctionnelle à la tige de piston **(121)** ;
**caractérisé en ce que :**
le ressort à disque **(131)** soutient de manière fonctionnelle le diaphragme **(128),**
dans lequel le ressort à disque **(131)** est conçu pour transmettre des forces sur la tige de piston **(121)** ainsi que pour supporter le diaphragme **(128)** ;
dans lequel le ressort à disque (131) est en prise avec la rainure annulaire (170) ;
dans lequel le diaphragme (128) est serré sur l'autre rainure annulaire (190) ; et
dans lequel le ressort à disque (131) fournit une surface de repos au diaphragme (128) sans décalage de hauteur.

2. Réducteur de pression **(100)** selon la revendication 1,
dans lequel le ressort à disque **(131)** est un ressort à disque fendu **(131).**

3. Réducteur de pression **(100)** selon la revendication 2,
dans lequel le ressort à disque fendu **(131)** définit des fentes **(150, 160)** sur le diamètre interne et le diamètre externe respectivement.

4. Réducteur de pression **(100)** selon les revendications 2 à 3,
dans lequel le ressort à disque fendu **(131)** est adapté pour permettre à la tige de piston **(121)** de présenter une course de 3 mm.

5. Réducteur de pression **(100)** selon les revendications 2 à 4,
dans lequel le ressort à disque fendu **(131)** est adapté pour venir en prise avec une rainure annulaire **(170)** dans la tige de piston **(121).**

6. Réducteur de pression **(100)** selon les revendications 2 à 5,
dans lequel le corps de réducteur de pression **(110)** définit un évidement annulaire **(180)** pour soutenir le ressort à disque fendu **(131).**

7. Réducteur de pression **(100)** selon l'une quelconque des revendications précédentes,
dans lequel le réducteur de pression **(100)** génère une pression de sortie constante de 4 bars.

8. Réducteur de pression **(100)** selon l'une quelconque des revendications précédentes,
dans lequel le réducteur de pression **(100)** génère une pression de sortie constante de 1,5 bars.

9. Réducteur de pression **(100)** selon l'une quelconque des revendications précédentes,
dans lequel une valve **(129)** permet et empêche sélectivement le passage de fluide par l'intermédiaire de la section d'entrée **(122).**

10. Réducteur de pression **(100)** selon l'une quelconque des revendications précédentes,
dans lequel le réducteur de pression **(100)** est utilisé dans l'irrigation au goutte-à-goutte.
